# EUROPÄISCHE PATENTSCHRIFT

(11) **EP 1 292 776 B1**
(45) Veröffentlichungstag und Bekanntmachung des Hinweises auf die Patenterteilung: **13.06.2007**
(21) Anmeldenummer: 01931302.2
(22) Anmeldetag: 21.05.2001
(51) Int. Cl.: F16B 5/04, F16B 17/00

(54) **HOHLNIETVERBINDUNG ZWISCHEN ZWEI BLECHEN UND VERFAHREN ZU IHRER HERSTELLUNG**
TUBULAR RIVET CONNECTION BETWEEN TWO METAL SHEETS AND METHOD FOR THE PRODUCTION THEREOF
LIAISON PAR RIVET TUBULAIRE ENTRE DEUX TOLES ET PROCEDE DE FABRICATION DE LADITE LIAISON

(30) Priorität: 08.06.2000 CH 113100
(43) Veröffentlichungstag der Anmeldung: 19.03.2003
(73) Patentinhaber: Adval Tech Holding AG, 3172 Niederwangen (CH)
(72) Erfinder: LÜTHI, Rudolf, CH-3172 Niederwangen (CH)
(74) Vertreter: Bremi, Tobias Hans
(86) Internationale Anmeldenummer: PCT/CH2001/000311
(87) Internationale Veröffentlichungsnummer: WO 2001/094797

(56) Entgegenhaltungen:
- DE-A- 3 936 967
- DE-C- 918 090
- FR-A- 2 371 252

## Beschreibung

### TECHNISCHES GEBIET

Die vorliegende Erfindung betrifft eine Hohlnietverbindung zwischen mindestens einem ersten und einem zweiten Blech, wobei der Hohlniet aus dem Material des ersten Blechs durch Verformung des Randbereichs eines ersten Lochs in dem ersten Blech in einer Ziehrichtung in ein zweites, grösseres Loch in dem zweiten Blech hergestellt ist, wobei der Hohlniet über das zweite Blech nicht übersteht und wobei das zweite Loch in dem zweiten Blech bezüglich seines Durchmessers in der Ziehrichtung erweitert ist

Die Erfindung betrifft auch ein Verfahren zur Herstellung einer solchen Hohinietverbindung, wobei das zweite Blech durch eine Matritze unterstützt wird.

### STAND DER TECHNIK

Eine Hohlnietverbindung der vorgenannten Art ist bespielsweise bekannt aus der FR 2371252, wobei der Durchmesser des zweiten Lochs stufenförmig erweitert ist. In Ziehrichtung schliesst der Hohlniet bündig mit der rückwärtigen Seite des zweiten Blechs ab. Erreicht wird dies durch Verwendung einer Matritze zur Abstützung des zweiten Blechs, die einen geringeren Durchmesser aufweist als das Loch in dem zweiten Blech. Der Durchmesser der Matritze ist auf den verwendeten Ziehstempel abgestimmt. Der Ziehstempel weist einen sich zu seinem freien Ende hin verjüngenden Abschnitt mit einer zylindrischen Partie auf.

Aus der DE 918 090 ist eine Hohlnietverbindung zwischen zwei Blechen bekannt, wobei das zweite Blech mit einer sich in der Ziehrichtung konisch erweiterenden Bohrung versehen. Die beiden Bleche werden mit dem zweiten Blech unten auf eine Unterlage gelegt, die eine Bohrung enthält, in die ein Stempel mit seinem verjüngten Ende (Spitze) in der Ziehrichtung hineinbewegt werden kann. Beim Herunterbewegen des Stempels wird zunächst ein Loch in dem oberen, ersten Blech mit Hilfe der Spitze des Stempels gebildet. Dabei zieht der Stempel zunächst etwas Werkstoff von dem ersten Blech in die sich erweiterende Bohrung im zweiten Blech hinein. Beim weiteren Herunterbewegen des Stempels wird dann mit seinem stärkeren Teil eine Vertiefung 8 in dem oberen Blech gebildet, wobei durch den verdrängten Werkstoff die Bohrung in dem zweiten Blech mit Werkstoff voll ausgefüllt wird. Auf diese Weise schliesst der Hohlniet wiederum bündig mit dem zweiten Blech ab. Es ergibt sich eine äusserst feste Verbindung und ein äusserlich vollkommen glattes Aussehen.

Aus der DE 39 36 967 A1 ist ein Verfahren zur Verbindung zweier Bleche bekannt, wobei eines der Bleche verhältnismässig dünn und aus einem weichen und fliessfähigen Material besteht. Das andere Blech ist mit sich erweiterenden Durchbrüchen versehen und aus einem härteren Material. Mittels eines Formstempels wird das Blech aus dem fliessfähigen Material auf das zweite Blech und formschlüssig in die in diesem vorgesehen Durchbrüche gedrückt. Das Ganze erfolgt auf einer Unterlage, so dass das in die Durchbrüche hineingedrückte Material mit dem Blech aus dem härteren Material bündig abschliesst. Ein zentrales Loch entsteht bei dieser Verbindungstechnik in dem erzeugten Niet nicht. Das Niet ist insofern kein Hohlniet.

### DARSTELLUNG DER ERFINDUNG

Die vorliegende Erfindung stellt sich die Aufgabe, eine Hohlnietverbindung der eingangs genannten Art insbesondere bezüglich ihrer Herstellungssicherheit bei einer Serienfertigung weiter zu verbessern. Diese Aufgabe wird erfindungsgemäss bezüglich der Ausbildung der Hohlnietverbindung dadurch gelöst, dass der Hohlniet bezüglich seiner Länge in der Ziehrichtung kürzer als die Dicke des zweiten Blechs ausgebildet ist.

Hinsichtich des Verfahrens zur Herstellung einer solchen Hohlnietverbindung schlägt die Erfindung vor, das zweite Blech durch eine Matritze zu unterstützen, welche einen Durchmesser aufweist, der dem Durchmesser des Lochs im zweiten Blech etwa entspricht.

Die Erfindung geht von der Erkenntnis aus, dass handelsübliche Bleche eine gewisse Dickentoleranz im Bereich um +/- 5% gegenüber einem Sollwert aufweisen. Sofern bei den erläuterten Verfahren nach dem Stand der Technik das erste Blech im Plusbereich liegt und das zweite Blech im Minus-Bereich, ist in Bezug auf die eingesetzte Werkzeuganordnung und das herzustellende Hohlniet am ersten Blech mehr Material vorhanden, als in das Loch in dem zweiten Blech hineinfliessen kann. Hierbei besteht dann die Gefahr, dass das überschüssige Material in den Spalt zwischen dem Ziehstempel und der Ziehmatritze gequetscht wird. Ist dies der Fall, dann kann es passieren, dass sich entweder der Niet verklemmt, die Matritze bricht, Restmaterial des Niets abreisst und/oder sich ein Span bildet. All dies ist zumindest bei einer Serienfertigung nicht tolerabel, insbesondere wenn die Nietverbindung lediglich ein Schritt eines mehrstufigen Prozesses unter Verwendung eines sehr teuren Transferwerkzeugs in einer mit hohen Hubzahlen betriebenden Presse ist.

Indem nach der Erfindung der Hohlniet bezüglich seiner Länge in der Ziehrichtung kürzer als die Dicke des zweiten Blechs ausgebildet ist, können die vorstehend genannten Probleme zumindest in einem statistisch sehr hohen Ausmass vermieden werden. Bevorzugt wird die Länge des Hohlniets unter Berücksichtigung der jeweiligen Dickenschwankungen der verwendeten Bleche gewählt. Die Einstellung der Länge des Hohlnietes kann einfach durch eine geeignete Abstimmung der Lochdurchmesser im ersten und im zweiten Blech erfolgen.

Indem der Niet nach der Erfindung kürzer als die Dicke des zweiten Blechs ausgebildet ist, muss die zur Abstützung des zweiten Blechs verwendete Matritze, anders als beim erläuterten Stand der Technik, auch nicht länger in den Bereich des zweiten Lochs hineinragen und dadurch das Ausziehen des Nietes über das zweite Blech hinaus begrenzen. Vielmehr kann der Durchmesser der Matritze grösser gewählt werden, insbesondere etwa gleich gross wie der Durchmesser des zweiten Lochs. Hierdurch entsteht zwischen dem in die Matritze eintauchenden Teil des Ziehstempels und der Matritze ein Spalt, der gross genug ist, die vorgenannten Probleme auch dann zu vermeiden, wenn es aufgrund eines extrem ungünstigen Dickenverhältnisses der beiden Bleche dennoch zu einem Ausziehen des Niets über das zweite Blech hinaus kommen sollte.

Als ein weiterer Vorteil der Erfindung ist es anzusehen, dass das zweite Blech bezüglich seiner Dicke in wesentlich weiteren Grenzen dimensioniert werden kann. Es könnte zwischen dem ersten und dem zweiten Blech auch mindestens noch ein weiteres Blech eingefügt werden. Wie beim Stand der Technik trägt die erfindungsgemässe Hohlnietverbindung auf keiner der äusseren Seiten des Blechpakets irgendwie auf.

Vorteilhafte und deshalb bevorzugte Ausgestaltungen der Erfindung sind in den abhängigen Ansprüchen gekennzeichnet.

### KURZE ERLÄUTERUNG DER FIGUREN

Die Erfindung soll nachfolgend anhand von Ausführungsbeispielen im Zusammenhang mit der Zeichnung näher erläutert werden. Es zeigt:
- Fig. 1: im Schnitt zwei miteinander zu verbindende Bleche, in weichen bereits die für die Herstellung einer erfindungsgemässen Hohlnietverbindung notwendigen Löcher vorgesehen sind;
- Fig. 2: die beiden Bleche mit der fertigen Hohlnietverbindung nach der Erfindung;
- Fig. 3: die beiden Bleche zusammen mit einem Kragenziehstempel und einer Matritze vor dem Ausziehen des Hohlniets;
- Fig. 4: die beiden Bleche zusammen mit einem Kragenziehstempel und einer Matritze nach dem Ausziehen des Hohlniets;
- Fig. 5: einen weiteren Kragenziehstempel; und
- Fig. 6: unter a) eine konvexe und unter b) eine konkave Ausbildung des erfindungsgemässen Hohlniets.

### WEGE ZUR AUSFÜHRUNG DER ERFINDUNG

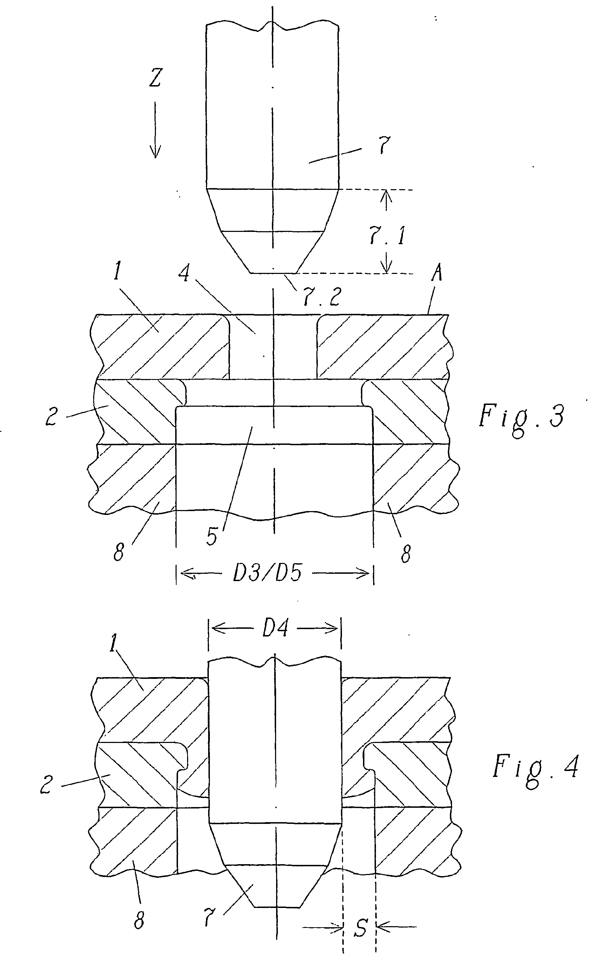

In der Zeichnung bezeichnet 1 ein erstes Blech und 2 ein zweites Blech, welche flächig aufeinanderliegen. Mit 3 ist in Fig. 2 ein Ziehkragen bzw. der Hohlniet der Hohlnietverbindung bezeichnet.

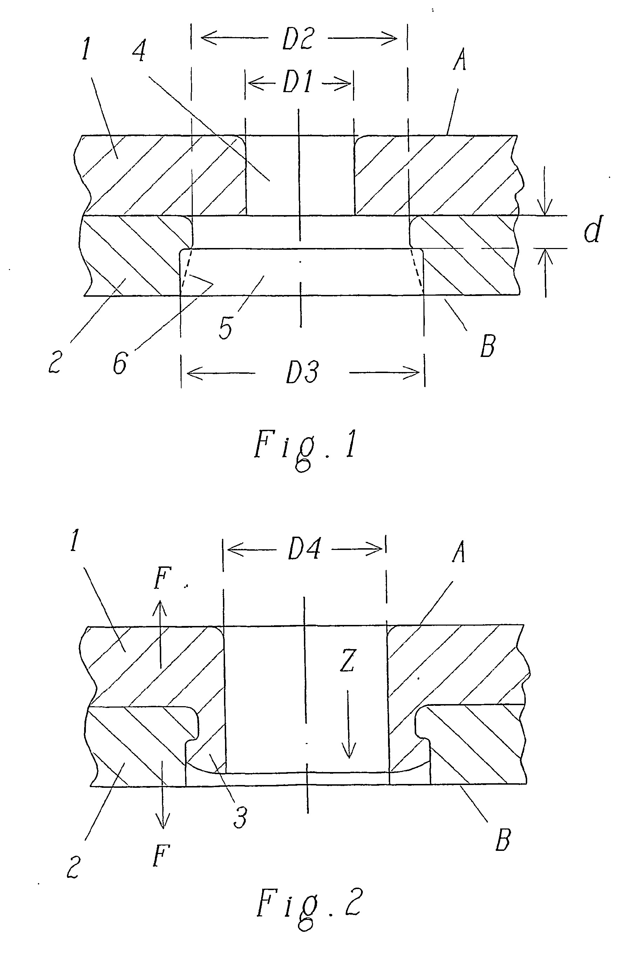

Fig. 1 zeigt die beiden Bleche 1 und 2 vor dem Ausziehen des Ziehkragens bzw. Hohlniets 3. Das erste Blech 1 ist hier mit einem ersten Loch 4 mit einem Durchmesser D1 versehen. In dem zweiten Blech 2 ist ebenfalls ein Loch 5 vorhanden, welches jedoch grösser als das erste Loch 4 ist. Zusätzlich weist dieses zweite Loch 5 einen sich von dem ersten Blech 1 weg (spätere Ziehrichtung Z) erweiternden Durchmesser auf. In der bevorzugten Ausführungsform und wie in der Zeichnung auch dargestellt ist diese Erweiterung stufenförmig mit einem kleineren Durchmesser D2 und einem grösseren Durchmesser D3.

Fig. 2 zeigt die fertige Hohlnietverbindung, bei welcher der Ziehkragen 3 in dem zweiten Loch 5 um die darin ausgebildete Stufe herum geformt ist, wodurch eine formschlüssige Verbindung entsteht, die sehr hohen Trennkräften F widersteht. Der Hohlniet 3 ist bezüglich seiner Länge in der Ziehrichtung Z kürzer als die Dicke des zweiten Blechs 2 ausgebildet, um Dickentoleranzen der Bleche im Bereich um jeweils +/- 5% Rechnung zu tragen.

Die Hohlnietverbindung gemäss Fig. 2 lässt sich mit einem geeigneten Kragenziehstempel 7 ausgehend von der Stuktur gemäss Fig. 1 in einem einzigen Arbeitsschritt herstellen, wie dies in den Figuren 3 und 4 dargestellt ist. Der Durchmesser D1 des ersten Lochs 4 in dem ersten Blech 1 wird hierbei von dessen Seite A aus in Richtung auf das zweite Blech 2 hin auf einen Durchmesser D4 unter plastischer Verformung des Materials im Randbereich des ersten Lochs 4 und unter Ausbildung des Ziehkragens 3 in dem zweiten Loch 5 so aufgeweitet, dass das Material des ersten Blechs 1 bei seiner plastischen Verformung in dem zweiten Loch 5 bereits auch über die darin ausgebildete Stufe in den grösseren Durchmesser D3 fliesst. Für die Ausbildung des Ziehkragens 3 wirkt das zweite Blech 2 dabei als Matritze. Das zweite Blech 2 wird seinerseits abgestützt durch eine Matritze 8.

Der Durchmesser D5 der Matritze ist etwa gleich dem Durchmessers D3 des zweiten Lochs 5 im zweiten Blech 2 bemessen, so dass sich zwischen der Matritze 8 und dem Kragenziehstempel 7, wenn letzterer gemäss Fig. 4 in die Matritze eingetaucht ist, ein Spalt S ergibt. Durch den Spalt S ist sichergestelt, dass eine Beschädigung des 7 und/oder der Matritze 8 auch dann vermieden werden kann, wenn trotz der erfindungsgemäss kurzen Ausbildung des Hohlniets 3 auf Grund äusserst ungünstiger Dickenverhältnisse der beiden Bleche 1 und 2 am ersten Blech 1 einmal mehr Material vorhanden ist, als in das Loch 5 in dem zweiten Blech 2 hineinfliessen kann.

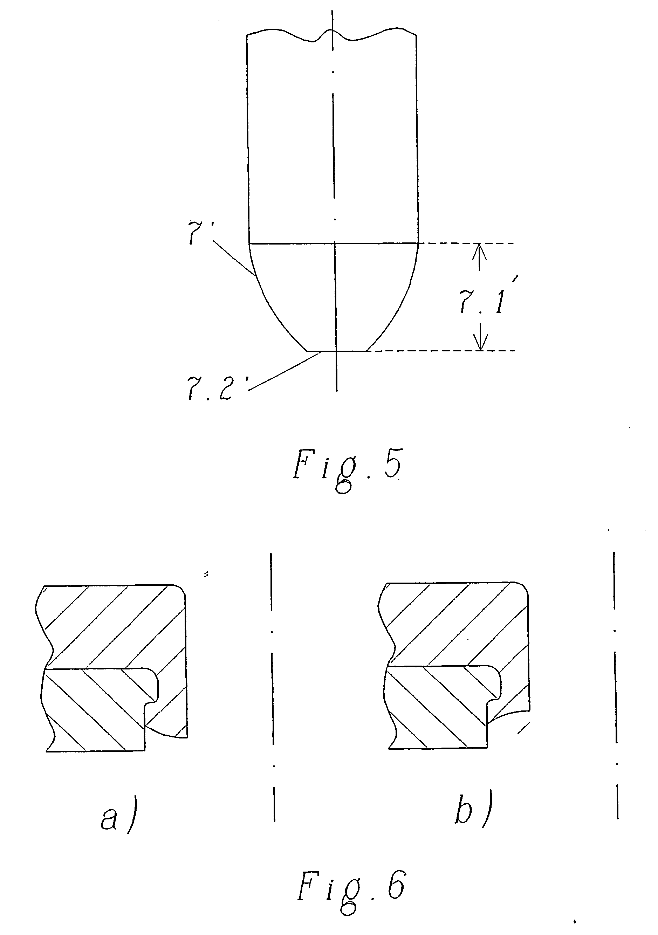

Der Kragenziehstempel 7 von Fig. 3 und 4 weist einen facettierten, sich unter einem stets von Null verschiedenen Winkel jedoch stetig gegenüber der Ziehrichtung Z zu seinem freien Ende 7.2 hin verjüngenden Abschnitt 7.1 auf. Jedenfalls ist der Kragenziehstempel 7 entlang des Abschnitts 7.1 nicht zylindrisch. Fig. 5 zeigt einen Kragenziehstempel 7' mit einem verrundeten vorderen Abschnitt 7.1', der sich ebenfalls stetig gegenüber der Ziehrichtung Z zu seinem freien Ende 7.2' hin verjüngt.

Abhängig von der Stempelform kann der Hohlniet 3 verschieden ausgezogen werden, z.B. konvex gemäss Fig. 6a) oder auch konkav gemäss Fig. 6b). Welche Ausbildung zur Anwendung kommt, entscheidet bevorzugt jeweils die Praxis.

Die in Fig. 2 dargestellte Hohlnietverbindung könnte auch in zwei Schritten hergestellt werden, wobei in einem ersten Schritt lediglich ein "gerader", d.h. noch nicht um die Stufe in dem zweiten Blech herumgeformter Ziehkragen hergestellt würde. Erst im zweiten Schritt würde dann dieser Ziehkragen durch teilweises Zurückdrücken von Seite B aus in die Stufe im zweiten Blech 2 hineingeformt.

Anstatt in dem zweiten Loch 5 eine Abstufung vorzusehen, wäre es auch möglich, das zweite Loch einfach nach aussen kontinuierlich, z.B. konisch, zu erweitern, wie dies in Fig. 1 strichliert ebenfalls angedeutet und mit 6 bezeichnet ist.. Die erreichbaren Trennkräfte F sind hierbei allerdings nicht ganz so hoch wie bei einer Abstufung, weshalb letztere bevorzugt ist. Abstufung und konische Erweiterung könnten jedoch auch in Kombination miteinander vorgesehen sein.

Die erfindungsgemässe Hohlnietverbindung eignet sich insbesondere zur Verbindung zweier Bleche mit Dicken zwischen 2 und 4 mm. Bei Blechdicken um 3 mm und bei Ausbildung einer Abstufung wird der Übergang zwischen den beiden Durchmessern D2 und D3 vorzugsweise so positioniert, dass die Stärke d des Abschnitts mit dem kleineren Durchmesser D2 etwa 1/4 bis 1/2 der Dicke des zweiten Blechs 2 beträgt. Der Durchmesser D3 kann dabei um 5-15 %, vorzugsweise jedoch um etwa 10 % der Dicke des zweiten Blechs 2 grösser als der Durchmesser D2 sein. Bei einer konischen Erweiterung sollte der Konuswinkel zwischen 5° und 15°, insbesondere etwa 10° betragen, und damit jedenfalls grösser sein als der Winkel , der sich z.B. bei einem Austanzen des zweiten Lochs 2 von Seite A her als Winkel sich "natürlich" ausbildenden Stanzkonus ergeben würde.

Herstellen lässt sich die Erweiterung (stufenförmig und/oder kontinuierlich) des Lochs 5 in dem zweiten Blech 2 z.B. in zwei Schritten, indem in einem ersten Schritt zunächst nur ein Loch mit dem Durchmesser D2 hergestellt wird. In einem zweiten Schritt wird dieses Loch von Seite B des zweiten Blechs 2 dann mit einem Stempel bis zu der gewünschten Tiefe auf den Durchmesser D3 erweitert. Da es hierbei zu einem Materialfluss in den Bereich der Stärke d kommen kann, muss der Durchmesser D2 ggf. anfänglich etwas überdimensioniert werden. In einem sogenannten Folgeverbundwerkzeug kann die Herstellung des Lochs mit dem Durchmesser D2 in einer ersten Station stanztechnisch von Seite A aus mit einem gewöhnlichen Stanzstempel und einer entsprechenden Matrize erfolgen. In einer nachfolgenden zweiten Station kann die teilweise Aufweitung dieses Lochs dann dadurch erfolgen, dass das Blech 2 mit seiner Seite B auf einer gefederten Platte abgelegt und von dem Oberteil des Werkzeugs zusammen mit der gefederten Platte nach unten über einen feststehenden, aus der gefederten Platte hervortretenden Stempel gedrückt wird.

Alternativ könnte das Loch 5 in dem zweiten Blech 2 mit seiner Erweiterung auch in einem einzigen Arbeitsschritt von Seite B aus mit einem Lochstempel erzeugt werden, welcher in seinem hinteren Bereich eine Abstufung von Durchmesser D2 auf Durchmesser D3 oder eine geeignete kontinuierliche Erweiterung aufweist.

### BEZEICHNUNGSLISTE

- 1: erstes Blech
- 2: zweites Blech
- 3: Ziehkragen oder Hohlniet
- 4: erstes Loch im ersten Blech
- 5: zweites Loch im zweiten Blech
- 6: konische Erweiterung
- 7: Kragenziehstempel
- 7.1: vordererAbschnitt des Kragenziehstempels
- 7.2: vorderes, freies Ende des Kragenziehstempels
- 8: Matritze
- D1 - D5: Durchmesser
- A: Seite des ersten Blechs
- B: Seite des zweiten Blechs
- d: Stärke des Abschnitts mit Durchmesser D2
- F: Trennkräfte
- Z: Ziehrichtung

## Patentansprüche

1. Hohlnietverbindung zwischen mindestens einem ersten (1) und einem zweiten Blech (2), wobei der Hohlniet (3) aus dem Material des ersten Blechs (1) durch Verformung des Randbereichs eines ersten Lochs (4) in dem ersten Blech (1) in einer Ziehrichtung (Z) in ein zweites, grösseres Loch (5) in dem zweiten Blech (2) hergestellt ist und wobei das zweite Loch (5) in dem zweiten Blech (2) bezüglich seines Durchmessers in der Ziehrichtung (Z) erweitert ist, **dadurch gekennzeichnet, dass** der Hohlniet (3) bezüglich seiner Länge in der Ziehrichtung (Z) kürzer als die Dicke des zweiten Blechs (2) ausgebildet ist.

2. Hohlnietverbindung nach Anspruch 1, **dadurch gekennzeichnet, dass** der Durchmesser (D2, D3) des zweiten Lochs (5) in dem zweiten Blech (2) in der Ziehrichtung (Z) stufenförmig erweitert ist.

3. Hohlnietverbindung nach Anspruch 2, **dadurch gekennzeichnet, dass** die stufenförmige Erweiterung des Durchmessers des zweiten Lochs (5) zwischen 5 % - 15 %, vorzugsweise jedoch etwa 10 % der Dicke des zweiten Blechs (2) beträgt.

4. Hohlnietverbindung nach Anspruch 2 oder 3, **dadurch gekennzeichnet, dass** die stufenförmige Erweiterung von einem kleineren Durchmesser (D2) auf einen grösseren Durchmesser (D3) in dem zweiten Blech (2) so positioniert ist, dass die Stärke (d) des Abschnitts mit dem kleineren Durchmesser (D2) etwa 1/4 bis 1/2 der Dicke des zweiten Blechs 2 beträgt.

5. Hohlnietverbindung nach einem der Ansprüche 1 - 4, **dadurch gekennzeichnet, dass** der Durchmesser des Lochs (5) in dem zweiten Blech (2) in der Ziehrichtung (Z) wenigstens abschnittsweise kontinuierlich, insbesondere konisch erweitert ist.

6. Hohlnietverbindung nach Anspruch 5, **dadurch gekennzeichnet, dass** der Winkel (α) der konischen Erweiterung (6) zwischen 5° und 15°, vorzugsweise jedoch etwa 10° beträgt.

7. Verfahren zur Herstellung einer Hohlnietverbindung nach einem der Ansprüche 1 - 6, wobei das zweite Blech (2) durch eine Matritze (8) unterstützt wird, **dadurch gekennzeichnet, dass** die Matritze (8) einen Durchmesser (D5) aufweist, welcher dem Durchmesser (D3) des Lochs (5) im zweiten Blech (2) etwa entspricht.

8. Verfahren zur Herstellung einer Hohlnietverbindung nach Anspruch 7 mittels eines in der Ziehrichtung (Z) bewegten Stempels (7), welcher einen sich zu seinem freien Ende hin verjüngenden Abschnitt aufweist, **dadurch gekennzeichnet, dass** sich der genannte Abschnitt zu dem freien Ende hin stetig unter einem stets von Null verschiedenen Winkel gegenüber der Ziehrichtung verjüngt.

9. Verfahren zur Herstelltung einer Hohlnietverbindung nach Anspruch 8, **dadurch gekenzeichnet**, dass der genannte Abschnitt des Stempels (7) mit Facetten versehen und/oder gekrümmt ausgebildet ist.

## Claims

1. A tubular rivet connection between at least one first metal sheet (1) and a second metal sheet (2), the tubular rivet (3) being produced from the material of the first metal sheet (1) by deforming, in a drawing direction (Z), the edge region of a first hole (4) in the first metal sheet (1) into a second, larger hole (5) in the second metal sheet (2), and the second hole (5) in the second metal sheet (2) being widened with regard to its diameter in the drawing direction (Z), **characterized in that** the tubular rivet (3) is designed to be shorter with regard to its length in the drawing direction (Z) than the thickness of the second metal sheet (2).

2. The tubular rivet connection as claimed in claim 1, **characterized in that** the diameter (D2, D3) of the second hole (5) in the second metal sheet (2) is widened in a stepped manner in the drawing direction (z).

3. The tubular rivet connection as claimed in claim 2, **characterized in that** the stepped widening of the diameter of the second hole (5) is between 5% and 15%, but preferably about 10%, of the second metal sheet (2).

4. The tubular rivet connection as claimed in claim 2 or 3, **characterized in that** the stepped widening from a smaller diameter (D2) to a larger diameter (D3) in the second sheet (2) is positioned in such a way that the thickness (d) of the section having the smaller diameter (D2) is about ¼ to ½ the thickness of the second metal sheet (2).

5. The tubular rivet connection as claimed in one of claims 1 to 4, **characterized in that** the diameter of the hole (5) in the second metal sheet (2), in the drawing direction (Z), is widened continuously, in particular conically, at least in sections.

6. The tubular rivet connection as claimed in claim 5, **characterized in that** the angle (α) of the conical widening (6) is between 5° and 15°, but preferably about 10°.

7. A method of producing a tubular rivet connection as claimed in one of claims 1 to 6, the second metal sheet (2) being supported by a die (8), **characterized in that** the die (8) has a diameter (D5) which approximately corresponds to the diameter (D3) of the hole (5) in the second metal sheet (2).

8. The method of producing a tubular rivet connection as claimed in claim 7 by means of a punch (7) which is moved in the drawing direction (Z) and has a section tapering toward its free end, **characterized in that** said section tapers continuously toward the free end at an angle always differing from zero relative to the drawing direction.

9. The method of producing a tubular rivet connection as claimed in claim 8, **characterized in that** said section of the punch (7) is provided with bevels and/or is designed to be curved.

## Revendications

1. Assemblage par rivet creux entre au moins une première (1) et une deuxième tôle (2), le rivet creux (3) étant réalisé à partir du matériau de la première tôle (1) par déformation du bord d'un premier trou (4) dans la première tôle (1) dans une direction d'étirage (Z) dans un deuxième trou (5) plus grand dans la deuxième tôle (2) et le deuxième trou (5) dans la deuxième tôle (2) ayant un diamètre s'élargissant dans la direction d'étirage (Z), **caractérisé en ce que** le rivet creux (3) est réalisé avec une longueur dans la direction d'étirage (Z) qui est plus courte que l'épaisseur de la deuxième tôle (2).

2. Assemblage par rivet creux selon la revendication 1, **caractérisé en ce que** le diamètre (D2, D3) du deuxième trou (5) dans la deuxième tôle (2) s'élargit par paliers dans la direction d'étirage (Z).

3. Assemblage par rivet creux selon la revendication 2, **caractérisé en ce que** l'élargissement par paliers du diamètre du deuxième trou (5) est de l'ordre de 5 % à 15 %, de préférence cependant 10 % environ de l'épaisseur de la deuxième tôle (2).

4. Assemblage par rivet creux selon la revendication 2 ou 3, **caractérisé en ce que** l'élargissement par paliers depuis un diamètre plus petit (D2) vers un diamètre plus grand (D3) dans la deuxième tôle (2) est positionné de telle sorte que l'épaisseur (d) de la partie avec le plus petit diamètre (D2) est égaie à environ 1/4 à 1/2 de l'épaisseur de la deuxième tôle (2).

5. Assemblage par rivet creux selon l'une quelconque des revendications 1 à 4, **caractérisé en ce que** le diamètre du trou (5) dans la deuxième tôle (2) s'élargit au moins par zones en continu, en particulier sous forme conique dans la direction d'étirage (Z).

6. Assemblage par rivet creux selon la revendication 5, **caractérisé en ce que** l'angle (α) de l'élargissement conique (6) se situe entre 5° et 15°, de préférence cependant est égal à environ 10°.

7. Procédé de réalisation d'un assemblage par rivet creux selon l'une quelconque des revendications 1 à 6, la deuxième tôle (2) étant supportée par une matrice (8), **caractérisé en ce que** la matrice (8) a un diamètre (D5) qui correspond sensiblement au diamètre (D3) du trou (5) dans la deuxième tôle (2).

8. Procédé de réalisation d'un assemblage par rivet creux selon la revendication 7 au moyen d'un poinçon (7) mobile dans la direction d'étirage (Z), lequel comporte une partie se rétrécissant vers son extrémité libre, **caractérisé en ce que** ladite partie se rétrécit en continu vers l'extrémité libre en délimitant avec la direction d'étirage un angle toujours différent de zéro.

9. Procédé de réalisation d'un assemblage par rivet creux selon la revendication 8, **caractérisé en ce que** ladite partie du poinçon (7) est munie de facettes et/ou est courbe.
